**Europäisches Patentamt**

**European Patent Office**

**Office européen des brevets**

(11) Veröffentlichungsnummer: **0 206 989**
**A1**

# (12) EUROPÄISCHE PATENTANMELDUNG

(21) Anmeldenummer: **86810241.9**

(22) Anmeldetag: **05.06.86**

(51) Int. Cl.⁴: **C 04 B 30/02**, B 22 D 11/06
//
(C04B30/02, 14:04, 14:10, 14:22, 14:46, 22:00)

(30) Priorität: **14.06.85 CH 2528/85**

(43) Veröffentlichungstag der Anmeldung: **30.12.86**
**Patentblatt 86/52**

(84) Benannte Vertragsstaaten: **AT BE CH DE FR GB IT LI LU NL SE**

(71) Anmelder: **SCHWEIZERISCHE ALUMINIUM AG, CH-3965 Chippis (CH)**

(72) Erfinder: **Molnar, Sandor, Rheinfallstrasse 9, CH-8212 Neuhausen am Rheinfall (CH)**
Erfinder: **Maurer, Albert, Egelseeweg 4, CH-8240 Thayngen (CH)**
Erfinder: **Schelbli, Peter, Hammermauer 228, CH-8212 Hallau (CH)**

(54) **Asbestfreies Material mit anorganischen Fasern sowie ein Verfahren zur Herstellung des Materials.**

(57) Ein Asbestfreies Material aus einem Gemisch von 15-80 Gew.-% anorganischen Fasern und 85-20 Gew.-% keramischem Bindestoff der Zusammensetzung 0-80 Gew.-% Ton, 0-30 Gew.-% Speckstein, 0-50 Gew.-% Cordierit, 0-25 Gew.-% Glasfritte und 0-25 Gew.-% Borphosphat. Das Material weist ein homogenes, schwammartiges Strukturgerüst aus keramischem Bindestoff mit meist durchgängigen Poren, in das die Fasern eingebettet sind, eine Porosität von 60-85% und ein Raumgewicht von 0.4-1.0 g/cm³ auf.

Ein Verfahren zur Herstellung des asbestfreien Materials besteht darin, dass eine anorganische Fasermatte mit einem wässerigen, die keramischen Bindestoffbestandteile enthaltenden Schlicker getränkt, getrocknet und vorzugsweise bei 500-800° C gebrannt wird.

Das Material ist besonders geeignet zur Herstellung von selbsttragenden Bauteilen für Giessdüsen zum Zuführen einer Aluminium- oder Aluminiumlegierungsschmelze zum kontinuierlichen Giessen von Bändern.

ASBESTFREIES MATERIAL MIT ANORGANISCHEN FASERN SOWIE EIN
VERFAHREN ZUR HERSTELLUNG DES MATERIALS

Die Erfindung betrifft ein asbestfreies Material mit anorganischen Fasern sowie ein Verfahren zur Herstellung des Materials.

Aus der DE-PS 32 19 470 ist eine asbestfreie Masse zur Verwendung als Auskleidung für Schwimmer, Düsen, Platten und Heisskopfkokilleneinsätze für den Guss von Aluminium und Aluminiumlegierungen bekannt. Diese Masse weist neben günstigen Wärmeisolationswerten und geringer oder fehlender Empfindlichkeit gegenüber Wasseraufnahme - und damit einfacher Lagerfähigkeit - gute chemische Resistenz und keine oder nur eine schlechte Benetzbarkeit gegenüber Aluminium und dessen Legierungen auf.

Sie hat den wesentlichen Nachteil, dass die Biegefestigkeit nur im Bereich von 1.4-2.2 N/mm$^2$ liegt. Die geringe Biegefestigkeit führt insbesondere bei Verwendung der Masse für selbsttragende Bauteile von Giessereiartikeln, z.B. für Giessrinnen oder Giessdüsen, schnell zum Verschleiss oder bei geringer Ueberbeanspruchung über die üblichen Toleranzgrenzen der Teile bereits zum Bruch; dies kommt insbesondere beim kontinuierlichen Giessen von Aluminium- oder Aluminiumlegierungsbändern mit Hilfe einer aufwendigen Giessmaschine wie beispielsweise einer Raupenkokillengiessmaschine vor, bei der die Giessform durch eine Doppelreihe von Kokillenhälften, die zu zwei endlosen umlaufenden Ketten vereinigt sind, gebildet ist und bei der die mindestens teilweise selbsttragende Metallzufuhrdüse wegen der Ausbildung der Kokillenumlenkung verhältnismässig lang sein muss und bis in den geschlossenen Teil der Kokille hineinragt. Ein Ausfall der Giessdüse zieht in der Regel lange Stillstandzeiten der Anlage und somit hohe Folgekosten nach sich. Die Masse ist daher für die Verwendung zu Giessereiartikeln nur begrenzt einsetzbar, insbesondere ist es unzweckmässig, daraus selbsttragende Giessdüsen herzustellen.

Hiervon ausgehend liegt der Erfindung die Aufgabe zugrunde, ein Material mit günstigen Wärmeisolationswerten, guter chemischer Resistenz, keiner oder nur schlechter Benetzbarkeit gegenüber Aluminium und dessen Legierungen und geringer oder fehlender Empfindlichkeit gegenüber Wasseraufnahme zu schaffen, das eine höhere Biegefestigkeit als 2.2 N/mm$^2$ aufweist und ein Verfahren zur Herstellung des Materials anzugeben. Nach einer weiteren Aufgabenstellung sollte das zu schaffende Material gut bearbeitbar sein und sich für die Herstellung von selbsttragenden Bauteilen für Giessereiartikel, insbesondere für Metallzufuhrdüsen in Raupenkokillengiessmaschinen, eignen.

Die Aufgabe wird erfindungsgemäss dadurch gelöst, dass das Material aus einem Gemisch von 15-80 Gew.-% anorganischen Fasern und 85-20 Gew.-% keramischem Bindestoff der Zusammensetzung

0-80 Gew.-% Ton,

0-30 Gew.-% Speckstein,

0-50 Gew.-% Cordierit,

0-25 Gew.-% Glasfritte und

0-25 Gew.-% Borphosphat

besteht, welches ein homogenes, schwammartiges Strukturgerüst aus keramischem Bindestoff mit meist durchgängigen Poren, in dem die Fasern eingebettet sind, bildet, eine Porosität von 60-85 % und ein Raumgewicht von 0.4-1.0 g/cm$^3$ aufweist.

Das Material hat bei Verwendung handelsüblicher, loser anorganischer Fasern eine mittlere Biegefestigkeit von 3.0 N/mm$^2$ oder darüber. Erstaunlicherweise erreichen Materialien in einer besonderen Ausführungsform bei Verwendung von Fasern mit einem Fasergerüst mit Filztextur in Form von Matten, welche bei höherem Raumgewicht plattenartige Steifigkeit aufweisen können, als Ausgangsmaterial sogar wesentlich höhere Biegefestigkeiten.

Im Gegensatz zur Masse nach dem Stand der Technik, wo durch den Aufbereitungsschritt - nämlich das Homogenisieren und Pelletieren des Fasermaterials zusammen mit Kaolin - sich die Fasern in Form von Zusammenballungen meist bezugslos in der Masse finden, liegen nach einer besonderen Ausführungsform in dem erfindungsgemässen Material die Fasern in Form eines kontinuierlichen Fasergerüsts vor, mit der Folge, dass sich zusammen mit dem Bindestoff ein gleichmässiger Faser-Bindestoff-Verbund mit der genannten Porosität herausbildet.

Der keramische Bindestoff wird durch den inneren Verbund der Fasern gefestigt und die homogen verteilten, meist durchgängigen Poren geben dem Material eine kavernöse bzw. schwammartige Ausbildung. Dieses Gefüge verleiht dem Material ein niedriges Raumgewicht und günstige Wärmeisolationswerte. Ferner wird auf Grund der chemischen Zusammensetzung des keramischen Bindestoffs eine gute chemische Resistenz und keine Benetzbarkeit gegenüber Aluminium und dessen Legierungen herbeigeführt.

In einer bevorzugten Ausführungsform ist der keramische Bindestoff aus

60-75 Gew.-% Ton,

10-20 Gew.-% Speckstein,

0-20 Gew.-% Cordierit,

5-10 Gew.-% Glasfritte und

5-15 Gew.-% Borphosphat

zusammengesetzt.

Die Verwendung dieses Bindestoffzusammensetzungsbereichs ergeben erfindungsgemässe Materialien mit gegenüber dem vorgenannten weiteren Bindestoffzusammensetzungsbereich bei Beibehaltung der sonstigen Eigenschaften erhöhte Biegefestigkeiten.

Erfindungsgemässe Materialien mit Aluminiumsilikat- oder Aluminiumoxidfasern mit Faserlängen von etwa 0.5 bis 20 mm, insbesondere etwa 5-20 mm, in Form von watte - oder plattenartigen (gepressten) Matten haben mittlere Biegefestigkeiten von 5-11 $N/mm^2$ und bei erfindungsgemässen Materialien, bei denen die Fasern Längen von etwa 10 bis 50 mm aufweisen, wurden sogar mittlere Biegefestigkeiten von 15-28 $N/mm^2$ erhalten. Diese Materialien können - durch den Herstellungsprozess der Matten bedingt - mehr oder weniger flächenhafte Paralleltextur aufweisen.

Trotz der hohen Bruchfestigkeit des Materials kann die Härte bzw. Kratzfestigkeit durch Veränderung der Zusammensetzung des Gemischs von Fasern und Bindestoff und insbesondere durch die Sintertemperatur auf einen derart niedrigen Wert eingestellt werden, dass z.B. beim Einsatz in Raupenkokillengiessmaschinen der vorgenannten Art die Kokillenoberfläche durch eine aus diesem Material hergestellte Giessdüse nicht zerkratzt wird.

Das erfindungsgemässe Material kann dadurch hergestellt werden, dass eine anorganische Fasermatte mit einem Raumgewicht von mindestens 40 g/dm$^3$ mit einem wässrigen als Feststoff

0-80 Gew.-% Ton,

0-30 Gew.-% Speckstein,

0-50 Gew.-% Cordierit,

0-25 Gew.-% Glasfritte und

0-25 Gew.-% Borphosphat

enthaltenden Schlicker der Dichte 1.1-1.5 g/cm$^3$ getränkt, getrocknet und gebrannt wird. Bevorzugt wird die getränkte Matte vor oder gleichzeitig mit dem Trocknen in einer Presse bis zu einem Verhältnis von 10:1, vorzugsweise 3:1, verdichtet. Als Temperatur für den Brand sind bereits 500°C ausreichend. Für den nachfolgend beschriebenen Verwendungszweck ist der Temperaturbereich von 500-800°C besonders geeignet, weil die gewünschten Eigenschaften dann optimal erreicht werden. Für andere Zwecke mag eine über 800°C liegende Brandtemperatur bevorzugt sein, jedoch wird insbesondere bei Anwesenheit von grösseren Anteilen an Glasfritte dann das Material spröder.

Um ein Eindringen des Schlickers in das Fasermaterial zu begünstigen, ist es zweckmässig, einen feinkörnigen und leichtflüssigen Schlicker zu verwenden; letzteres kann durch sorgfältige Herabsetzung der Viskosität des Schlickers mit den an sich bekannten Verflüssigern herbeigeführt werden. Gegebenenfalls kann zusätzlich ein organisches Bindemittel zur Erhöhung der Grünfestigkeit des Materials beigegeben werden.

Als Ton eignet sich jeder verarbeitbare, nicht oder nur wenig quellfähige Ton. Als Glasfritte wird ein in der Nähe des Aluminiumschmelzpunktes erweichendes Glaspulver mit möglichst breitem Erweichungsintervall eingesetzt.

Die mittlere Korngrösse der Feststoffanteile liegt vorzugsweise bei 1-5 μm. Als besonders günstig erwies sich eine mittlere Korngrösse von 1-2 μm.

Vorzugsweise werden, wie die Werte der Biegefestigkeiten zeigen, Fasermatten aus Aluminiumsilikat oder Aluminiumoxid eingesetzt. Die Verdichtung der getränkten Fasermatte hängt wesentlich vom Raumgewicht und dem Verfilzungsgrad der Matte im ursprünglichen Zustand ab. In der Regel werden watteartige Matten am stärksten, feste, plattenartige Matten, welche gleichzeitig ein hohes Raumgewicht aufweisen, nicht oder nur wenig verdichtet. Bei einer Matte mit einem mittleren Verfilzungsgrad und einem Raumgewicht von etwa 100 g/dm$^3$ ist eine Verdichtung von 3:1 besonders günstig, um die angestrebten Werkstoffeigenschaften des Materials zu erreichen.

Die Trocknung und der nachfolgende Brandprozess sind an sich problemlos. Die Trocknung kann gleichzeitig mit dem Verdichten in der Presse oder separat erfolgen. Zweckmässig ist es jedoch - zumindest, wenn formgepresste, selbsttragende Teile hergestellt werden sollen -, wenn Verdichtung und Trocknung in derselben Apparatur vorgenommen werden.

Beim Herstellen der erfindungsgemässen Materialien mit verschiedener Zusammensetzung im Rahmen der angeführten Grenzen hat sich gezeigt, dass ein Schlicker mit einem Feststoffgehalt

60-75 Gew.-% Ton,

10-20 Gew.-% Speckstein,

0-20 Gew.-% Cordierit,

5-10 Gew.-% Glasfritte und

5-15 Gew.-% Borphosphat

schnell und vollständig die Matte durchtränkt und zudem das mit diesem Schlicker hergestellte Material sehr hohe Biegefestigkeiten aufweist.

Das Material lässt sich besonders zur Herstellung von Giessereiartikeln, insbesondere für Aluminium- oder Aluminiumlegierungen, verwenden. Es lassen sich daraus gut wärmeisolierende Bauteile zum Zuführen einer Aluminium- oder Aluminiumlegierungsschmelze herstellen. Besonders vorteilhaft ist das Material für die Herstellung von ein- oder mehrstückigen Giessdüsen, insbesondere selbsttragenden Giessdüsen, zum kontinuierlichen Giessen von Bändern aus Aluminium- oder Aluminiumlegierungen, z.B. für die Herstellung von Düsen als Metallzuführung von Raupenkokillengiessmaschinen der eingangs genannten Art.

Die selbsttragenden Bauteile aus dem erfindungsgemässen, leichtbearbeitbaren Material, insbesondere Giessdüsenteile, können aus Platten des erfindungsgemässen Materials in einfacher Weise durch mechanische Bearbeitung gefertigt oder direkt während der Herstellung des Materials bei Anwendung entsprechender Presswerkzeuge geformt werden, so dass allenfalls eine geringfügige Nachbearbeitung der Formteile erfolgen muss. Die letztgenannte Vorgehensweise wird bevorzugt, da sie eine Reduktion der Herstellungskosten der Bauteile mit sich bringt.

Die aus dem erfindungsgemässen Material hergestellten Bauteile haben den besonderen Vorteil, dass sie beim ersten Beaufschlagen mit flüssigem Aluminium oder dessen Legierungen nicht reissen und in ständigem Kontakt mit dem flüssigen Metall keine nachteiligen Form- oder Volumenänderungen erfahren. Dies ist im wesentlichen auf die geringe Wärmeausdehnung des Materials zurückzuführen. Die Wärmeleitfähigkeit ist auf Grund der niedrigen Materialdichte so klein, dass es nicht zum Erstarren des flüssigen Metalls durch übermässige Wärmeabfuhr kommt.

Das erfindungsgemässe Material lässt sich praktisch von Aluminium oder seinen Legierungen nicht benetzen und nimmt bei Lagerung an Luft nur äusserst wenig Wasser auf. Zur gezielten Veränderung der Oberflächeneigenschaften eines aus dem erfindungsgemässen Material hergestellten Bauteils kann noch eine Engobe aufgetragen werden.

Beispiel

Rohmaterial bestehend aus

65 Gew.-% Ton,

15 Gew.-% Speckstein,

2.5 Gew.-% Cordierit,

5 Gew.-% Glasfritte und

12.5 Gew.-% Borphosphat

wurde in wenig Wasser aufgeschlemmt und in einer Kugelmühle auf eine mittlere Korngrösse von 2 µm feingemahlen. Durch weitere Zugabe von Wasser wurde ein dünnflüssiger Schlicker mit einer Dichte von 1.26 g/cm$^3$ hergestellt, dem 10 ml Verflüssiger und 10 ml 3-%ige Stärke-Lösung als organisches Bindemittel pro Liter zugegeben wurde.

Eine Fasermatte aus Aluminiumsilikat mit Fasern der Längen von etwa 5-20 mm und einem Raumgewicht von 128 g/dm$^3$ wurde auf den Schlicker gelegt und von Hand leicht hineingetaucht, dann mit Hilfe zweier perforierter Platten gekehrt und wiederum getaucht. Drei auf diese Weise getränkte Matten wurden übereinandergelegt. Nach Abtropfen des überflüssigen Schlickers auf einer perforierten Platte wurden die getränkten Matten in einer Heizpresse mit planparallelem Backen auf ein Drittel der ursprünglichen Dicke verdichtet und im verdichteten Zustand während 5 Stunden bei 90°C an Luft getrocknet und anschliessend in einem elektrisch beheizten Ofen 8 Stunden bei 700°C gebrannt.

Das plattenförmige Material wies ein Raumgewicht von 0.73 g/cm$^3$, eine Biegefestigkeit von 10.5 N/mm$^2$ und eine Härte von 1-2 (nach Mohs) auf. Durch mechanische Bearbeitung wurden daraus freitragende Bauteile einer Giessdüse für eine Raupenkokillengiessmaschine zum Giessen von Aluminium oder dessen Legierungen hergestellt. Die Düse zeigte nach dem Einsatz über mehrere Stunden weder Risse noch sonstige Formveränderungen.

In analoger Weise wurden weitere Versuche - ausser Beispiele 5 und 6 - nur mit einer Matte durchgeführt, die nachfolgend tabellarisch zusammengefasst sind.

In den Beispielen 2-6 (Tabelle I) wurde ein Schlicker der Zusammensetzung wie in Beispiel 1 verwendet. In diesen Beispielen wurden insbesondere das Fasermaterial und die Verdichtung der getränkten Matten variiert.

In den Beispielen 7-11 (Tabelle II) wurde im wesentlichen die Zusammensetzung des Feststoffs des Schlickers variiert. Dabei haben Ton A - ein Glashafenton - und Ton B - ein Töpferton - die folgende Zusammensetzung:

|  | Ton A (Gew.-%) | Ton B (Gew.-%) |
|---|---|---|
| $SiO_2$ | 51 | 51 |
| $Al_2O_3$ | 32 | 12 |
| $Fe_2O_3$ | 2 | 4 |
| $TiO_2$ | 1 | 0.5 |
| CaO | 0.5 | 14 |
| MgO | 1 | 1.5 |
| $K_2O$ | 2.5 | 2 |
| Glühverlust | 10 | 15 |
|  | 100 | 100 |

Die weiteren geänderten Massnahmen innerhalb dieser Beispielreihe waren teilweise zufällig oder entstammten früheren Optimierungsversuchen.

Die Biegefestigkeiten aller Beispiele, ausgenommen Beispiel 6, wurden nach der 3-Punkt-Messmethode an Prüfkörpern von 5x20x100 mm mit einer Toleranz von etwa 10 % gemessen. Der Wert der Biegefestigkeit von Beispiel 6 wurde an einem Prüfkörper mit den Massen 10x20x100 mm bestimmt.

| TABELLE I | | Beispiel 2 | Beispiel 3 | Beispiel 4 | Beispiel 5 | Beispiel 6 |
|---|---|---|---|---|---|---|
| **Fasermatte** | Material | Aluminium-silikat watteartig | Aluminium-silikat watteartig | Aluminium-silikat plattenartig (gepresst) | Aluminium-oxid watteartig | Sandwich Aluminiumoxid/ Aluminiumsilikat/Alu-miniumoxid: 1:4:1 watteartig |
| | Raumgewicht (g/dm$^3$) | 96 | 64 | 270 | 40 | 40/128/40 |
| | Faserlängen (mm) | ~5-20 | ~5-30 | ~0.5-2 | ~10-50 | ~5-20/~10-50/~5-20 |
| **Schlik-ker** | Dichte (g/cm$^3$) | 1.26 | 1.20 | 1.23 | 1.26 | 1.26 |
| | Feststoffkorngrösse (μm) (Mittelwert) | 1.8 | 1.8 | 1.8 | 1.8 | 1.8 |
| **Behand-lung** | Verdichtung der getränkten Matte | 4:1 | 3:1 | 1.4:1 | 8:1 | 5:1 (gesamt) |
| | Brenntemperatur (C°) | 700 | 700 | 700 | 700 | 700 |
| **Eigenschaften des Materials (Endprodukt)** | Raumgewicht (g/cm$^3$) | 0.71 | 0.50 | 0.66 | 0.64 | 0.69 (Mittelwert) |
| | Porosität (%) | 73 | 81 | 74 | 76 | 72-76 |
| | Biegefestigkeit(N/mm$^2$) (Mittelwert) | 10.7 | 4.6 | 6.7 | 28 | 22 (Sandwich-Prüfkörper) |
| | Härte nach Mohs | 1-2 | 1-2 | 1-2 | 1-2 | 1-2 |
| | Wasseraufnahme(Gew.-%) 1 Woche an Luft | 0.35 | 0.30 | 0.5 | 0.3 | 0.35 |
| | Linearer thermischer Ausdehnungskoeffizient (mm/mm·C°) | 3.1 - 3.5 x 10$^{-6}$ im Bereich von 20-800°C | | | | |

Wärmeisolationsfähigkeit, Thermoschockbeständigkeit sowie Formstabilität sind bei allen Materialien sehr gut.

| TABELLE II | | Beispiel 7 | Beispiel 8 | Beispiel 9 | Beispiel 10 | Beispiel 11 |
|---|---|---|---|---|---|---|
| **Schlicker** | Feststoff (Gew.-%) | | | | | |
| | Ton A | 60 | -- | -- | 75 | 40 |
| | Ton B | -- | -- | 40 | -- | 40 |
| | Speckstein | 10 | 10 | 30 | 10 | -- |
| | Cordierit | 5 | 50 | -- | -- | 5 |
| | Glasfritte | 25 | 15 | 20 | -- | 5 |
| | $BPO_4$ | -- | 25 | 10 | 15 | 10 |
| | Dichte ($g/cm^3$) | 1.24 | 1.30 | 1.26 | 1.22 | 1.23 |
| | Feststoffkorngrösse ($\mu m$) (Mittelwert) | 1.4 | 2.7 | 3.8 | 1.5 | 1.9 |
| **Faser-matte** | Aluminiumsilikat mit Faserlängen etwa 5-20 mm | | | | | |
| | Raumgewicht ($g/dm^3$) | 128 | 128 | 128 | 128 | 128 |
| **Behand-lung** | Verdichtung der getränkten Matte | 3:1 | 3:1 | 3:1 | 3:1 | 3:1 |
| | Brenntemperatur (C°) | 800 | 775 | 700 | 500 | 725 |
| **Eigenschaften des Materials (Endprodukt)** | Raumgewicht ($g/cm^3$) | 0.71 | 0.83 | 0.76 | 0.65 | 0.68 |
| | Porosität (%) | 73 | 69 | 71 | 75 | 74 |
| | Biegefestigkeit ($N/mm^2$) (Mittelwert) | 7.6 | 6.8 | 6.4 | 5.1 | 9.7 |

Die weiteren Eigenschaften der Materialien liegen im Bereich der in Tabelle I angegebenen Werte.

0206989

- 14 -

PATENTANSPRÜCHE

1.  Asbestfreies Material mit anorganischen Fasern dadurch gekennzeichnet,

    dass es aus einem Gemisch von 15-80 Gew.-% anorganischen Fasern und 85-20 Gew.-% keramischem Bindestoff
    der Zusammensetzung

    0-80 Gew.-% Ton,

    0-30 Gew.-% Speckstein,

    0-50 Gew.-% Cordierit,

    0-25 Gew.-% Glasfritte und

    0-25 Gew.-% Borphosphat

    besteht, welches ein homogenes, schwammartiges Strukturgerüst aus keramischem Bindestoff mit meist durchgängigen Poren, in dem die Fasern eingebettet sind,
    bildet, eine Porosität von 60-85 % und ein Raumgewicht
    von 0.4-1.0 $g/cm^3$ aufweist.

2.  Asbestfreies Material nach Anspruch 1, dadurch gekennzeichnet, dass der keramische Bindestoff aus

    60-75 Gew.-% Ton

    10-20 Gew.-% Speckstein,

     0-20 Gew.-% Cordierit

     5-10 Gew.-% Glasfritte und

     5-15 Gew.-% Borphosphat

    besteht.

3. Asbestfreies Material nach Anspruch 1 oder 2, dadurch gekennzeichnet, dass die Fasern aus Aluminiumsilikat oder Aluminiumoxid bestehen.

4. Asbestfreies Material nach einem der Ansprüche 1-3, dadurch gekennzeichnet, dass die Fasern in Form einer Matte mit einem Fasergerüst mit Filztextur als Ausgangsmaterial vorliegen.

5. Asbestfreies Material nach Anspruch 3 oder 4, dadurch gekennzeichnet, dass es mit Fasern der Längen von etwa 0.5-20 mm, insbesondere etwa 5-20 mm, eine mittlere Biegefestigkeit von 5-11 $N/mm^2$ aufweist.

6. Asbestfreies Material nach einem der Ansprüche 3 oder 4, dadurch gekennzeichnet, dass es mit Fasern der Längen von etwa 10 bis 50 mm eine mittlere Biegefestigkeit von 15-28 $N/mm^2$ aufweist.

7. Asbestfreies Material nach einem der Ansprüche 4-6, dadurch gekennzeichnet, dass es eine flächenhafte Paralleltextur aufweist.

8. Verfahren zur Herstellung eines asbestfreien Materials nach einem der Ansprüche 4-7, dadurch gekennzeichnet, dass eine anorganische Fasermatte mit einem Raumgewicht von mindestens 40 $g/dm^3$ mit einem wässrigen, als Feststoff

0-80 Gew.-% Ton,

0-30 Gew.-% Speckstein,

0-50 Gew.-% Cordierit,

0-25 Gew.-% Glasfritte und

0-25 Gew.-% Borphosphat


gegebenenfalls Verflüssiger und/oder organisches Bindemittel enthaltenden Schlicker der Dichte 1.1-1.5 g/cm³
getränkt, getrocknet und bei mindestens 500°C gebrannt
wird.


9. Verfahren zur Herstellung eines asbestfreien Materials,
   nach Anspruch 8, dadurch gekennzeichnet, dass die im
   Schlicker enthaltenen Feststoffe


   60-75 Gew.-% Ton,

   10-20 Gew.-% Speckstein,

    0-20 Gew.-% Cordierit,

    5-10 Gew.-% Glasfritte und

    5-15 Gew.-% Borphosphat


   sind.


10. Verfahren zur Herstellung eines asbestfreien Materials
    nach Anspruch 8 oder 9, dadurch gekennzeichnet, dass
    die Feststoffe des Schlickers eine mittlere Korngrösse
    von 1-5 µm, vorzugsweise 1-2 µm, aufweisen.


11. Verfahren nach Anspruch 8 oder 9, dadurch gekennzeichnet, dass die getränkte Fasermatte vor oder gleichzeitig mit dem Trocknen in einer Presse bis zu einem Verhältnis von 10:1, vorzugsweise 3:1, verdichtet wird.

12. Verfahren zur Herstellung eines asbestfreien Materials nach Anspruch 11, dadurch gekennzeichnet, dass mit der Verdichtung der getränkten Fasermatte gleichzeitig ein Bauteil eines Giessereiartikels geformt wird.

13. Verfahren zur Herstellung eines asbestfreien Materials nach Anspruch 8 oder 9, dadurch gekennzeichnet, dass der Brand bei 500-800°C durchgeführt wird.

14. Verwendeung des Materials nach einem der Ansprüche 1-7 zur Herstellung von Giessereiartikeln, insbesondere für Aluminium- oder Aluminiumlegierungsschmelzen.

15. Verwendung des Materials nach Anspruch 13 für Bauteile, insbesondere selbsttragende, zum Zuführen einer Aluminium- oder Aluminiumlegierungsschmelze.

16. Verwendung des Materials nach Anspruch 13 für ein- oder mehrstückige Giessdüsen, insbesondere selbsttragende, zum kontinuierlichen Giessen von Bändern aus Aluminium oder einer Aluminiumlegierung.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-3 219 470 (ALCAN INT.)<br><br>* Ansprüche 1,2,4,5 *<br><br>--- | 1,3,5,<br>6,14-<br>16 | C 04 B 30/02<br>B 22 D 11/06 //<br>(C 04 B 30/02<br>C 04 B 14:04<br>C 04 B 14:10<br>C 04 B 14:22 |
| Y | GB-A-1 576 312 (MORGANITE CERAMIC FIBRES)<br><br>* Ansprüche 1,2,5-7,10,12 * | 1,3,5,<br>6,14-<br>16 | C 04 B 14:46<br>C 04 B 22:00 ) |
| Y | | 1,4,8 | |
| Y | CHEMICAL ABSTRACTS, Band 100, Nr.22, Mai 1984, Seite 268, Ref.Nr. 179222g; Columbus, Ohio, US; & JP-A- 59 18 175 (MATSUSHITA ELECTRIC INDUSTRIAL CO. LTD.) 30-01-1984<br>* Abstract *<br><br>--- | 1,4,8 | |
| A | EP-A-0 014 055 (BABCOCK & WILCOX CO.)<br><br>* Anspruch 2 *<br><br>--- | 1,3,5,<br>6,11,<br>14-16 | RECHERCHIERTE SACHGEBIETE (Int. Cl.4)<br><br>C 04 B 30/00<br>C 04 B 26/00<br>C 04 B 33/00<br>C 04 B 35/00<br>C 04 B 41/00<br>B 22 D 11/00 |
| A | EP-A-0 127 051 (COMBUSTION ENG.)<br>* Zusammenfassung *<br><br>---    -/- | | |

Der vorliegende Recherchenbericht wurde für alle Patentansprüche erstellt.

| Recherchenort | Abschlußdatum der Recherche | Prüfer |
|---|---|---|
| DEN HAAG | 12-09-1986 | DAELEMAN F.C.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

# 0206989
Nummer der Anmeldung

**EUROPÄISCHER RECHERCHENBERICHT**

Europäisches Patentamt

EP 86 81 0241

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | BE-A- 624 215 (WOOD CONVERSION CO.) * Seite 2, Zeilen 25-30; Seite 3, Zeilen 23-31 * | | |
| A | FR-A- 946 044 (BALDWIN HILL) | | |

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 12-09-1986 | Prüfer DAELEMAN P.C.A. |
|---|---|---|